# EUROPÄISCHE PATENTANMELDUNG

(11) **EP 0 768 031 A1**
(43) Veröffentlichungstag der Anmeldung: **16.04.1997**
(21) Anmeldenummer: 96115762.5
(22) Anmeldetag: 02.10.1996
(51) Int. Cl.: A01M 23/02, A01M 23/12

(54) **Einrichtung zum Fangen und Töten von Kleinnagetieren, insbesondere Ratten**

(30) Priorität: 11.10.1995 DE 19537851
(71) Anmelder: Gschwind, Franz Joseph, 70374 Stuttgart (DE)
(72) Erfinder: Gschwind, Franz Joseph, 70374 Stuttgart (DE)

(57) **Zusammenfassung**

Die Erfindung betrifft eine Einrichtung zum Fangen und Töten von Kleinnagetieren, insbesondere von Ratten. Sie ist mit einem der Körpergrösse der Kleinnagetiere im Querschnitt angepassten Rohrsystem mit wenigstens einer dem Zugang der Kleinnagetiere ausgesetzten, verschliessbaren Zugangsöffnung versehen, die nach Eintritt eines Kleinnagetieres selbsttätig verschliessbar ist. Ferner hat die Einrichtung ein selbsttätig aktivierbares, eine Fluchtreaktion auslösendes Gebläse und einen am Ende des Rohrsystems angeordneten, unterkühlten Auffangbehälter, in dem das Kleinnagetier erfroren wird. Zur Vereinfachung des Fangsystems ist das Gebläse erfindungsgemäss als ein Heissluftgebläse ausgebildet, welches mindestens 50° C warme Luft ausstösst.

## Beschreibung

Die Erfindung betrifft eine Einrichtung zum Fangen und Töten von Kleinnagetieren, insbesondere von Ratten nach dem Oberbegriff von Anspruch 1.

In einem Beitrag in Nachrichtenmagazin "Der Spiegel", Heft 9, 1995, Seite 178, wird ein Rattenfangsystem der gattungsgemässen Art beschrieben, bei dem nach Eintritt einer Ratte in das Rohrsystem, diese durch eine, in dem System pneumatisch, nach Art einer Rohrpost beförderten Kugel, zur Flucht veranlasst und in eine Kältefalle getrieben wird. An diesem Fangsystem ist nachteilig, dass die Kugel nach jedem Fang umständlich durch Saugluft zurückgeholt werden muss, was ein umschaltbares Gebläse voraussetzt.

Nachteilig ist ferner, dass das Rohrsystem keine Engstellen haben darf, die die Kugel festhalten könnten. Das Rohrsystem muss also masshaltig sein, sorgfältig und fest und muss gut gewartet werden. Dies alles macht das Fangsystem aufwendig und teuer.

Aufgabe der Erfindung ist es, das gattungsgemäss zugrunde gelegte Fangsystem zu vereinfachen.

Diese Aufgabe wird erfindungsgemäss durch die kennzeichnenden Merkmale von Anspruch 1 gelöst. Danach wird vorzugsweise mittels Heissluft eine Fluchtreaktion beim Tier ausgelöst. Zwar ist auch mit Kaltluft der gleiche Effekt erzielbar, jedoch ist Kaltluft nur schwieriger verfügbar. Die heisse oder kalte Luft lässt ohne weiteres Querschnittverengungen zu und braucht nach einem Fang - im Gegensatz zu einer Kugelnicht zurückgeholt werden. Dadurch kann ein einfach und frei verlegtes Rohrsystem verwendet werden, welches ortsbeweglich sein und an unterschiedlichen Orten verwendet werden kann. Das System kann von selbst wieder auf unverdächtige Temperaturen abkühlen bzw. sich erwärmen und ist sofort wieder bereit zur Aufnahme eines weiteren Tieres.

Diese scheinbar kleinen Aenderungen ziehen eine ungeheure Menge von Vorteilen nach sich:
Rascher Auf- & Abbau einer Anlage. Für jedes Rohrsystem aus PVC verwendbar.
Einfaches Baukastensystem mit normalen Industrieerzeugnissen.
Dauernde Betriebsbereitschaft.
Keine Gefahr von Elektroschocks oder Gefährdung von Drittpersonen. (Spannung über dem System mur 13,6 Volt Gleichstrom).
Hohe Betriebssicherheit.
Leichte Anpassung an örtliche Gegebenheiten.
Auch im Freien verwendbar bei Nässe, Hitze, Kälte, Staub, Schnee und Eis.
Nach Inbetriebnahme keine Manipulation nötig, die die Tiere warnen könnte.
System erweiterbar auf beliebig viele Oeffnungen pro Lichtschranke und auch auf mehrere Systeme.
Das Entsorgungssystem kann beidseitig angeschlossen werden.
Kostengünstig, geringer Wartungsaufwand.

Ausserdem zeichnet sich das System noch besonders durch folgende Punkte aus: Umweltfreundlich, es werden keine Chemikalien verwendet.

Keine Köder nötig.Der Spieltrieb und die arttypische Neugier wird genützt.

Der Fluchtinstinkt wird durch das Heissluftgebläse oder durch die Kaltluft ausgelöst.

Schonende Tötung und Entsorgung der Tiere.

Zweckmässige Ausgestaltung der Erfindung können den Unteransprüchen entnommen werden. Im übrigen ist die Erfindung anhand eines Ausführungsbeispieles nachfolgend noch erläutert. Dabei zeigen:
- Fig. 1: ein Blockschaubild über das Fangsystem,
- Fig. 2: wiederum als Blockschaubild den Block A aus Fig. 1, nämlich die zentrale Stromversorgung,
- Fig. 3: ein weiteres Blockschaubild für den Funktionsblock B in Fig. 3, der den Steuerkasten und das Netzgerät beinhaltet,
- Fig. 4: eine schematische Seitendarstellung eines Zuluftgebläses entsprechend Funktionsblock C in Fig. 1,
- Fig. 5: eine schematische Seitendarstellung des Heissluftgebläses entsprechend dem Funktionsblock C ₁ in Fig. 1,

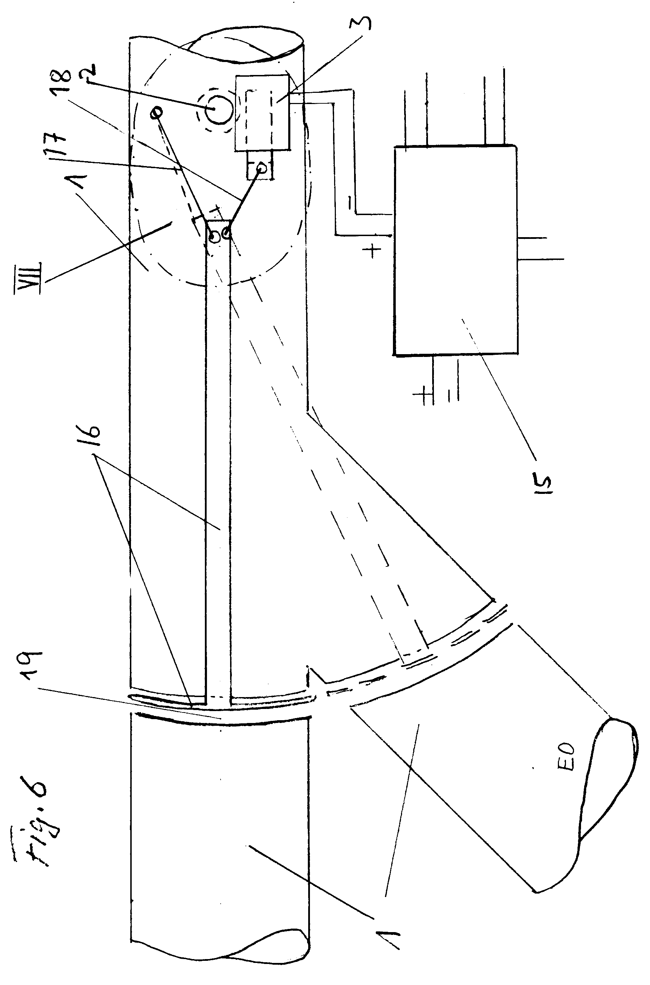

- Fig. 6: eine schematische Draufsicht auf einen verschliessbaren Eingang für eine Ratte innerhalb des Fangsystems, entsprechend Funktionsblock D in Fig. 1,
- Fig. 7: eine vergrösserte Darstellung der Einzelheit VII aus Fig. 6, die Klappenbetätigung betreffend,
- Fig. 8: eine labyrinthartige Erweiterungsmöglichkeit des Fangsystems, um die Tiere zu verwirren,
- Fig. 9 und 10: Seitenansicht (Fig. 9) und Querschnitt (Fig. 10) auf bzw. durch die eigentliche Falle oberhalb des unterkühlten Auffangbehälters.

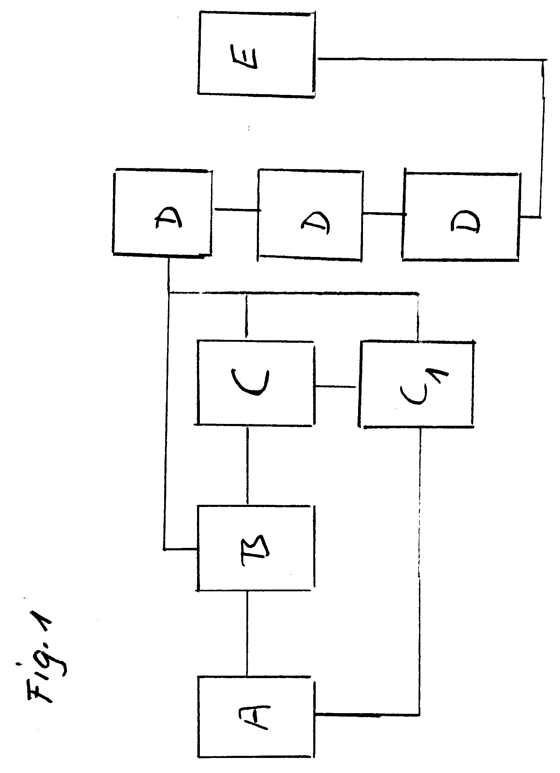

Das Blockschaubild nach Fig. 1 zeigt mit den Funktionsblöcken A bis E den Prozessverlauf des Fangsystems. Hierbei werden die einzelnen Teile ihrerseits anhand von Figuren erläutert.

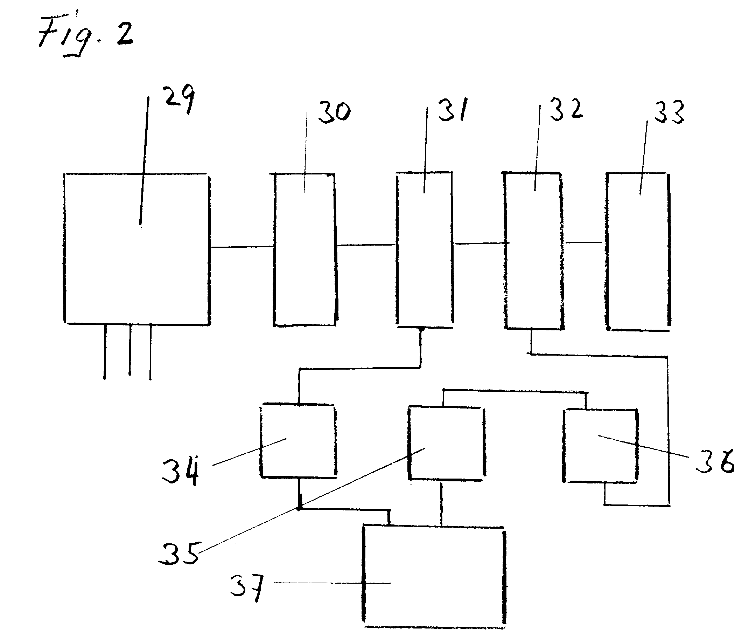

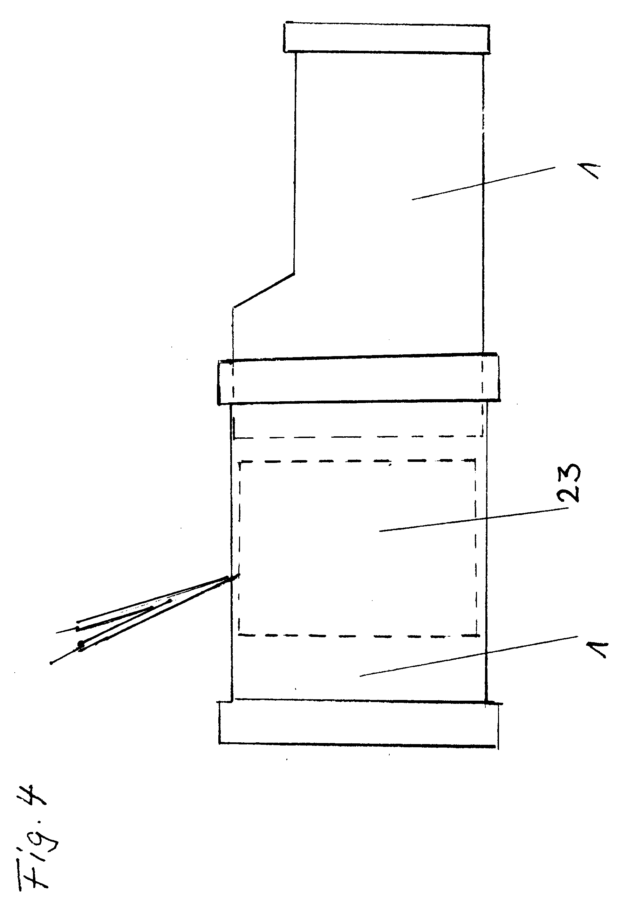

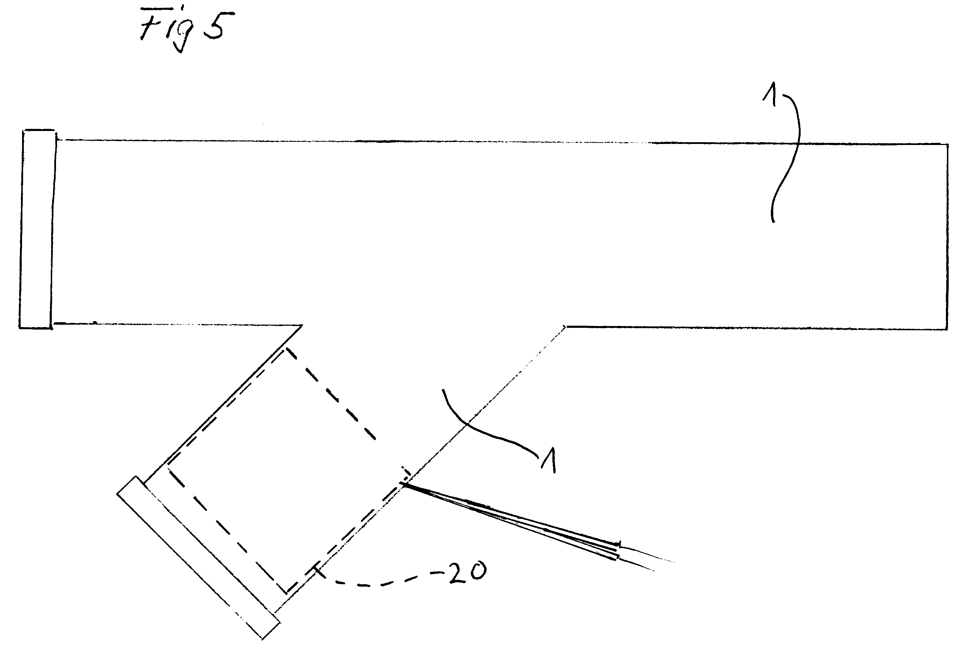

Fig. 2 ist die zentrale Stromversorgung. Von einem stationären Stromverteiler 29, Eingang 220 V Wechselstrom wird die Anlage versorgt. Von dort werden Uebergänge zu verschiedenen Steckdosen gespeist, nämlich Steckdosen 30, allgemeine Stromversorgung (Schweizer Norm), für Einschubgebläse Fig. 4 und für Heissluftgebläse 32 Fig. 5. Das Heissluftgebläse kann über ein Schütz bei Bedarf mit einem höheren Strom betrieben werden. Eine weitere Steckdose für allgemeinen Stromverbrauch, 220 V Wechselstrom in EU-Norm ist in den Stockdosen 33 vorgesehen.

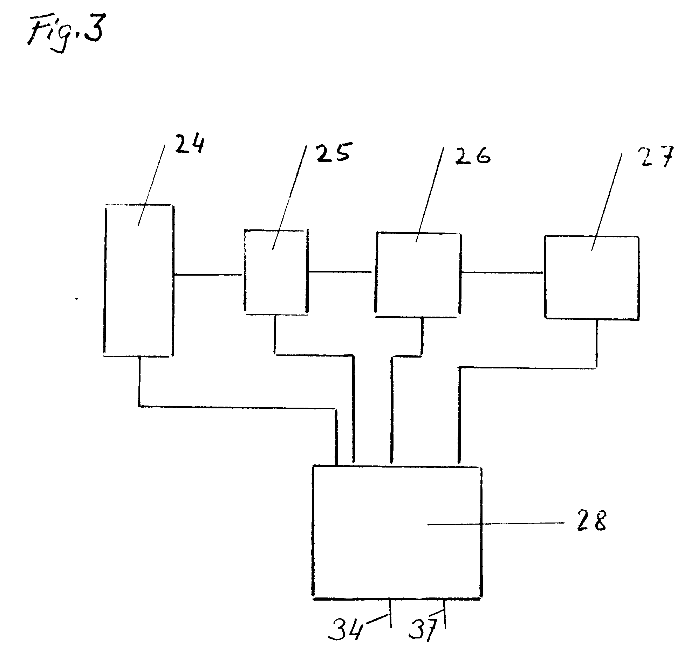

Die Wischrelais 34 und 35 dienen der zeitlichen Steuerung für das Einschubgebläse Fig. 4. Das Schütz 36 kann bei Bedarf mit einer höheren Spannung betrieben werden, wobei auch gleichzeitig die Steckdosen 32 entsprechend gewählt werden müssen. Die Uebertragungs- Verbindung 37 dient zur Steuerung und Stromversorgung durch Fig. 3.

Die Fig. 3 zeigt den Steuerungskasten mit Netzgerät für die zentrale Stromversorgung; sie liefert 13,6 V Gleichstrom bis zu 4 Amp. Das Netzgerät 24 dient der Sicherung einer konstanten Gleichspannung für alle installierten Elektronikbauteile und wird über Verteiler 28, sowohl für die beiden Wischrelais 34 und 37 Fig. 2, als auch für die Zeitschalter 25 und 26, sowie für die Reset- Steuerung 27 verwendet.

Das Netzgerät wird über die Steckdose 33 in Fig. 2 versorgt. Die Ausgangsspannung von 13,6 V wird über Verteiler 28 an die übrigen Verbraucher abgegeben.

Das Einschubgebläse nach Fig. 4 dient der Verstärkung der Luftmenge, um eine Ueberhitzung des Rohrsystems bei eingeschaltetem Heissluftgebläse zu verhindern. Gleichzeitig dient das Gebläse für die Kühlung des Rohrsystems nach Entsorgung und Tötung des Tieres, Rückführung der Temperatur (kühlen) und für das Bereitstellen für den nächsten Fang. Das Einschubgebläse ist von Fa. Marley E 95 M, Wohnraumventilator und Einschubbelüfter 220 V Wechselstrom. Als Heissluftgebläse nach Fig. 5 wurde das EWT- Heissluftgebläse HT 5002/5005 mit Ueberhitzungsschutz 220 V Wechselstrom,(Kundendienst: BRD Elektro-Wärme-Technik, Günter Petz, Flachslandstr. Nr. 8, 90431- Nürnberg verwendet.

Als verschliessbare Zugangsöffnung wurde ein Y- artiges Winkelstück mit dem Nennwert 70 mm verwendet. Es wird oberhalb des Zusammenschlusses der beiden Rohre durchgetrennt und der Abstand 19 dient nun der Führung eines Schaufelblattes 16 zum öffnen und schliessen der Eintrittsöffnung EO. Die Steuerung wird dadurch ausgelöst, dass ein Tier durch die Eintrittsöffnung EO die Lichtschranke 2 überquert.

Wird über die Steuerelektronik 15 jetzt der Hubmagnet 3 mit Strom versorgt, so zieht der Hubmagnet 3 an. Das Schaufelblatt 16 wird über die Eintrittsöffnung geschoben. Der Eintritt EO wird geschlossen. Gleichzeitig werden über die Zeitschalter 25 und 26 die Wischrelais 34 und 35 angesprochen. Diese steuern das Zuluftgebläse (Fig.4) und das Heisslufgebläse (Fig.5). In das Rohrsystem wird so Heissluft geblasen, damit das Tier die Flucht ergreift.

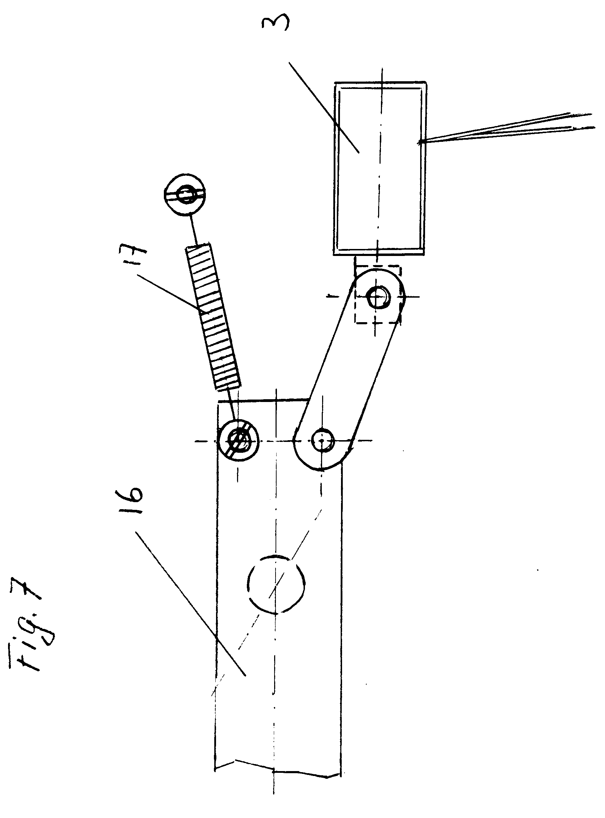

Nach der im Wischrelais eingegebenen Zeit (abhängig von der Länge des Rohrsystems) fallen beide Gebläse ab. Ueber das Resetrelais 27 wird die Steuerung der Elektronik angesprochen, welche die Stromversorgung des Hubmagneten 3 unterbricht. Das Schaufelblatt wird durch die Rückholfeder 17 (Fig. 7) in die Grundstellung zurückgebracht.

Gleichzeitig mit der Steuerelektronik werden auch alle evtl. weiteren Zugänge verschlossen, unabhängig davon, bei welchem Zugang der Kontakt über die Lichtschranke 2 ausgelöst wurde. Bei jedem weiteren Zugang erfolgt genau der gleiche Steuervorgang.

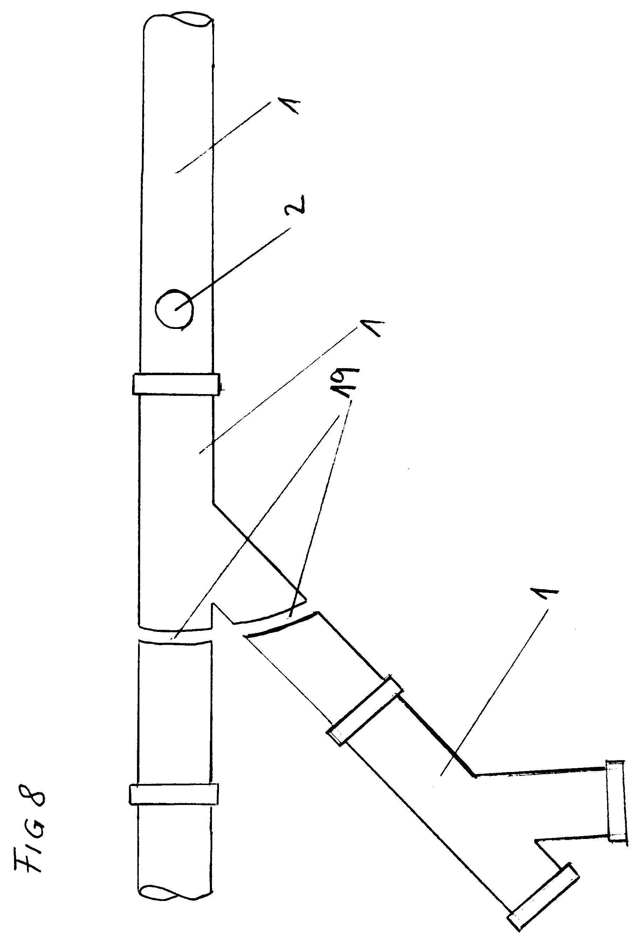

Im übrigen werden in Fig. 8 weitere Möglichkeiten aufgezeigt. Es können beliebig viele Zusatzsysteme aufgebaut werden, um den Tieren die Möglichkeit zu nehmen, das System kennenzulernen.

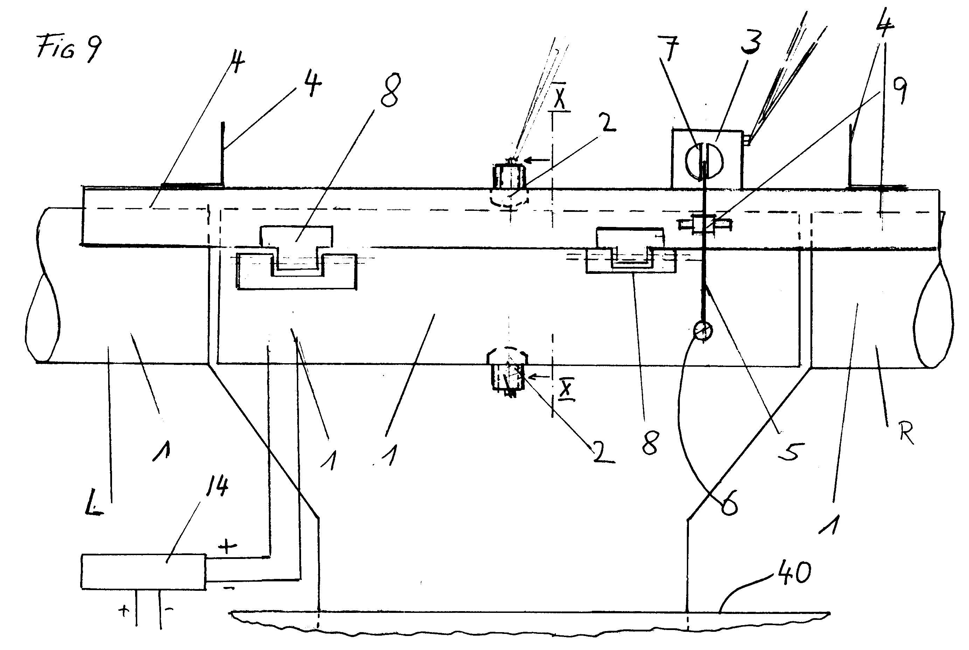

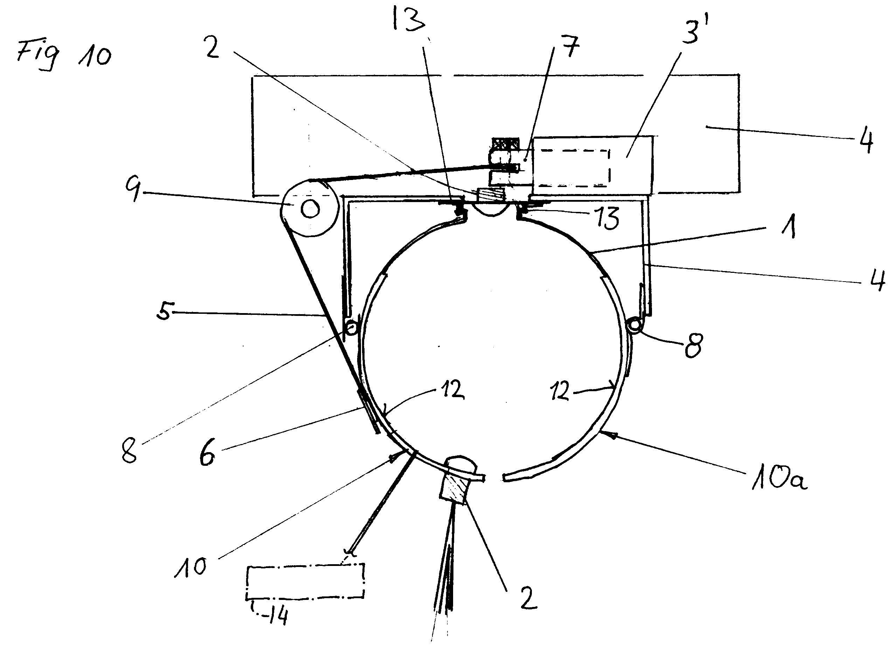

Bei der Falle nach den Figuren 9 und 10 sind an Längs- & Querträgern 4 zwei Hälften eines Rohrstückes des Rohrsystems aus Kunststoff über ein Scharnierniergelenk 8 frei schwenkbar befestigt.

Die Begrenzung der Schwenkungsbewegung der Rohrhalbschalen 10 und 10 a wird durch das Abdeckblech 13 mit Begrenzungsstiften bestimmt.

Ueber den Seilzug 5, der an den beiden Rohrhalbschalen befestigt ist und über die Umlenkrolle 9 dem Hubmagneten 3' zugeführt wird, werden die Rohrhalbschalen aufgeschwenkt. Es ist in Fig. 10 der Seilzug allerdings nur für die linke Rohrhalbschale dargestellt.

Wenn ein Tier das System betritt und über die Lichtschranke 2 die Elektronik angesprochen wird, so fliesst Strom über die beiden Schalenhälften, welche auf der Innenseite 12 mit Kupfer beschichtet sind. Das Tier erhält von der Zündspule 14 einen Elektroschock und ist dadurch für den Moment gelähmt. Gleichzeitig wird auch der Hubmagnet 3' unter Spannung gebracht und über den Seilzug 5 werden die beiden Schalenhälften weggeschwenkt. Das Tier fällt zur Tötung und Entsorgung in einen entsprechenden unterkühlten Behälter 40 oder Gefrierschrank.

Mit dem Auslösen der Lichtschranke 2 wird auch der Zündspule 14 Strom zugeführt, die für die Betäubung des Tieres sorgt.

Ein weiterer Vorteil dieser Falle liegt darin, dass die Tiere von beiden Seiten über festverlegte Rohre L und R zugeführt werden können. Ein zusätzlicher Vorteil ist, dass die Tiere durch den Elektroschock nur betäubt und nicht sofort getötet werden und nach dem Betäuben, durch Oeffnen der Falle sofort aus ihr entfernt werden. Dadurch wird die Falle nicht durch Kot oder Urin verunreinigt und bleibt auch ohne Wartung lange betriebssicher und sauber.

Durch das den verschliessbaren Zutrittsöffnungen vorgeschaltete Eintrittssystem werden die Kleinnagetiere entsprechend ihrem arttypischen Spieltrieb dazu animiert, sich spielerisch mit dem Fangsystem zu befassen und verirren sich dabei in die verschliessbare Zutrittsöffnung. Diese Falle bleibt den Tieren, die neu in die Nähe des Eintrittssystems kommen, zunächst verborgen und das ganze Fangsystem wird in seiner Gefährlichkeit den Tieren gegenüber verharmlost. Ein Lerneffekt kann dadurch nicht zu unbeteiligten Tieren gelangen.

## Patentansprüche

1. Einrichtung zum Fangen und Töten von Kleinnagetieren, insbesondere von Ratten, mit einem der Körpergrösse der Kleinnagetiere im Querschnitt angepassten Rohrsystem mit wenigstens einer, dem Zugang der Kleinnagetiere ausgesetzten, verschliessbaren Zugangsöffnung, die nach Eintritt eines Kleinnagetieres selbständig verschliessbar ist, mit einem selbsttätig aktivierbaren, eine Fluchtreaktion aus lösenden Gebläse und mit einem am Ende des Rohrsystems angeordneten unterkühlten Auffangbehälter, in dem das Kleinnagetier erfroren wird, dadurch gekennzeichnet, dass das Gebläse Heiss- oder Kaltluft fördert, wobei die ufttemperatur sich so stark von der Körpertemperatur des Kleinnagetieres unterscheidet, dass dadurch die Fluchtreaktion ausgelöst wird.

2. Fangsystem nach Anspruch 1
dadurch gekennzeichnet, dass die elektrische Beheizung zur Erzeugung der Heissluft nach Eintritt des Kleinnagetieres in die Kältefalle mit Aufrechterhaltung eines kalten Luftstromes, während einer Nachlauf- & Abkühlzeit abschaltbar ist.

3. Fangsystem nach Anspruch 1
dadurch gekennzeichnet, dass unmittelbar vor und oberhalb des Eintritts des Rohrsystems ein Bewegungssensor, insbesondere eine Lichtschranke und im Fluchtbereich dahinter ein Elektrodenpaar angeordnet ist, welches im Falle des Ansprechens des Bewegungssensors von einer Hochspannungsquelle aus mit einer, das Tier beim Vorbeilauf durch Elektroschock betäubenden Hochspannung, beaufschlagbar ist.

4. Fangsystem nach Anspruch 1
dadurch gekennzeichnet, dass im Bereich des Uebertritts des Rohrsystems in die Kältefalle das Rohr aus zwei spiegelbildlichen Rohrhalbschalen gebildet ist, die oberseitig scharnierartig miteinander verbunden und durch einen Betätigungsmechanismus underseitig falltürartig öffenbar sind.

5. Fangsystem nach Anspruch 1
dadurch gekennzeichnet, dass eine Zugangsöffnung über ein Y-Rohr in das Rohrsystem einmündet, wobei über einen anderen Schenkel des Y-Rohres die Heissluft zuführbar ist, dass nach einer Vereinigung der beiden Schenkel des Y-Rohres ein Bewegungssensor, insbesondere eine Lichtschranke angebracht ist und dass die beiden Schenkel durch einen einheitlichen Schieber steuerbar sind, der in der Ruhestellung den Heissluftschenkel verschliesst und die Zugangsöffnung freigibt und in der bei einem Ansprechen des Bewegungssensors auslösbaren Arbeitsstellung den Heissluftschenkel freigibt und die Zugangsöffnung verschliesst.

6. Fangsystem nach Anspruch 1
dadurch gekennzeichnet, dass bei grösseren Leitungslängen unterwegs wenigstens ein Zusatzgebläse vorgesehen ist, das über öffen- & verschliessbare Seitenöffnungen heisse bzw. kalte Luft in Fluchtrichtung in das System einspeist, sobald ein Kleinnagetier die Seitenöffnung passiert hat, was über eine installierte Lichtschranke detektierbar ist.

7. Fangsystem und Anspruch 1 dadurch gekennzeichnet, dass vor der verschliessbaren Zugangsöffnung in das Rohrsystem ein mit mehreren Oeffnungen versehenes, in die Zugangsöffnung übergehendes Eintrittssystem angeordnet ist, welches die Tiere zum Spielen animiert.
